## Europäisches Patentamt

## European Patent Office

## Office européen des brevets

(19)

(11) Veröffentlichungsnummer: **0 212 053**
**A2**

(12)
# EUROPÄISCHE PATENTANMELDUNG

(21) Anmeldenummer: **86104237.2**

(51) Int. Cl.⁴: **C 08 F 283/01**

(22) Anmeldetag: **27.03.86**

(30) Priorität: **04.08.85 DE 3512338**

(43) Veröffentlichungstag der Anmeldung: **04.03.87**
**Patentblatt 87/10**

(84) Benannte Vertragsstaaten: **DE FR GB IT**

(71) Anmelder: **BAYER AG, Konzernverwaltung RP**
**Patentabteilung, D-5090 Leverkusen 1 Bayerwerk (DE)**

(72) Erfinder: **Zabrocki, Karl, Dr., Edelfalter 33,**
**D-4044 Büttgen (DE)**
Erfinder: **Kress, Hans-Jürgen, Dr., Scheiblerstrasse 111,**
**D-4150 Krefeld (DE)**
Erfinder: **Ott, Karl-Heinz, Dr., Paul-Klee-Strasse 54,**
**D-5090 Leverkusen (DE)**
Erfinder: **Braun, Dietrich, Prof. Dr.,**
**Jakob-Jung-Strasse 56, D-6100 Darmstadt-Arheilgen**
**(DE)**
Erfinder: **Emirze, Ararad, Dr., Kurpfalzstrasse 20,**
**D-6750 Kaiserslautern (DE)**

(54) **Pfropfpolymerisate von Vinylmonomeren auf Polyesterharze.**

(57) Die vorliegende Erfindung betrifft nichtvernetzte Pfropfpolymerisate mit kammartigem Aufbau von Vinylmonome-
ren- bzw. Vinylmonomergemischen als Kammäste auf Polyesterharze als Pfropfbasis.

EP 0 212 053 A2

BAYER AKTIENGESELLSCHAFT    5090 Leverkusen, Bayerwerk
Konzernverwaltung RP
Patentabteilung            G/Th-c


Pfropfpolymerisate von Vinylmonomeren auf Polyesterharze
_____


Die Erfindung betrifft nichtvernetzte Pfropfpolymerisate mit kammartigem Aufbau von Vinylmonomeren oder Vinylmonomergemischen als Kammäste auf Polyesterharze als Pfropfbasis.

Die Herstellung von Polyestern auf Basis von aromatischen Dicarbonsäuren, $\alpha,\beta$-ethylenisch ungesättigten Dicarbonsäuren und Diolen ist prinzipiell bekannt (DE-AS 21 53 782). Diese ungesättigten Polyester werden als styrolische Lösung in der sogenannten UP-Harz-Technologie, wie z.B. in DE-OS 29 49 644, US-PS 3 076 787 und US-PS 3 207 816 beschrieben, eingesetzt.

Aus der DE-OS 24 35 863 ist die Verwendung ungesättigter Polyesterharze als styrolische Lösung in Mischung mit entsprechenden Lösungen von gesättigten Polyestern für die UP-Harz-Technologie bekannt.

Die Herstellung geeigneter Polyester und ihre Verwendung als thermoplastisch (durch Extrusion oder Spritzguß) zu verarbeitende Materialien beschreibt die österreichische Patentschrift 278 368.

Le A 23 721-Ausland

Gemäß DE-OS 24 35 863 sind solche Polyesterharze auch als Schmelzkleber einsetzbar. Gemäß US-PS 3 915 913 können solche Schmelzkleberharze bis zu 50 % eines Copolymerisats aus Vinylmonomeren enthalten.

Vinylharz-modifizierte ungesättigte Polyesterharze für Pulverüberzüge, die durch Emulsionspolymerisation von Styrol bzw. (Meth)Acrylaten in Gegenwart eines Polyesters aus Dimethylterephthalat, Neopentylglykol, Isophthalsäure und Dodecylbernsteinsäureanhydrid erhalten werden, sind in der japanischen Patentanmeldung 49-050091 beschrieben.

Blockartig aufgebaute Produkte aus einem ungesättigten Polyesterharz und einem Styrol/Alkylalkohol-Copolymer beschreibt US-PS 4 071 578.

All diesen Literaturstellen ist weder ein Hinweis auf nichtvernetzte, kammartige Pfropfpolymerisate von Vinylmonomeren oder Monomerengemischen auf ungesättigte Polyesterharze zu entnehmen, noch sind die speziellen Eigenschaften dieser Produkte erläutert.

Gegenstand der Erfindung sind nichtvernetzte Pfropfpolymerisate mit kammartigem Aufbau von Einheiten von Vinylmonomeren oder -gemischen als Kammäste auf Polyesterharzen, worin die als Pfropfgrundlage benutzten Polyesterharze in den verwendeten Vinylmonomeren oder -Gemischen in Mengen bis zu 30 Gew.-% löslich sind, Säurezahlen < 5 und OH-Zahlen zwischen 5 und 20, einen Gehalt an polymerisierbaren Doppelbindungen von 0,02 bis 0,05, vorzugsweise 0,03 bis 0,04 mäqv. pro Gramm Polyesterharz und ein Molekulargewicht (Gewichtsmittel) von 8000 bis 25 000 besitzen.

Le A 23 721

Insbesondere sind Gegenstand der Erfindung derartige nicht vernetzte Pfropfpolymerisate mit kammartigem Aufbau aus

A.) 90 - 70 Gew.-Teilen von Vinylmonomeren bzw. Vinylmonomergemischen auf

B.) 10 - 30 Gew.-Teilen eines Polyesterharzes,

auf Basis einer Mischung von α, β-ethylenisch ungesättgten Dicarbonsäuren, aromatischen Dicarbonsäuren und zweiwertigen Alkoholen.

Diese unvernetzten kammartigen Pfropfpolymerisate sind als Verträglichkeitsvermittler für unverträgliche Polymermischungen, insbesondere von Polyesterharzen und Polymerisaten von Vinylmonomeren oder Vinylmonomermischungen geeignet.

Ein weiter Gegenstand der Erfindung ist somit die Verwen-dung der erfindungsgemäßen nichtvernetzten Pfropfpolymeri-sate mit kammartigem Aufbau als Verträglichkeitsvermittler für Mischungen aus Polyesterharzen wie Polyalkylenterephthalat und Polymerisaten aus Vinylmonomeren oder Vinyl-monomergemischen, insbesondere Polymerisaten von Vinyl-aromaten.

Geeignete Vinylmonomere oder Vinylmonomergemische A.) im Sinne der Erfindung enthalten beispielsweise:

A.1.)     100 - 70 Gew.-Teile Styrol, α-Methylstyrol, kernsubstituiertes Styrol oder Mischungen daraus und

A.2.)     0 - 30 Gew.-Teile Acrylnitril oder Methacryl-nitril

Le A 23 721

0212053

Bevorzugte Mischungen bestehen aus 100 - 70 Gew.-Teilen Styrol und 0 - 30 Gew.-Teilen Acrylnitril. Besonders bevorzugt ist reines Styrol.

Geeignete ungesättigte Polyesterharze B.) im Sinne der Erfindung sind Kondensationsprodukte aus $\alpha$-$\beta$-ethylenisch ungesättigten Dicarbonsäuren oder deren Derivaten und aromatischen Dicarbonsäuren oder deren Derivaten und Diolen.

Beispiele für bevorzugt zu verwendende ungesättigte Dicarbonsäuren sowie deren Derivate sind Maleinsäure, Maleinsäureanhydrid, Maleinsäuredimethylester, Fumarsäure und Fumarsäuredimethylester. Verwendet werden können jedoch auch Mesaconsäure, Citraconsäure, Itaconsäure und Chlormaleinsäure.

Beispiele für bevorzugt zu verwendende aromatische Dicarbonsäuren sowie deren Derivate sind Phthalsäure, Phthalsäureanhydrid, Isophthalsäure, Terephthalsäure, und deren jeweilige Dimethylester. Um schwer entflammbare Harze herzustellen, können z.B. Tetrachlorphthalsäure oder Tetrabromphthalsäure sowie deren Dimethylester verwendet werden.

Als zweiwertige Alkohole können Ethylenglykol, Propandiol-1,2, Propandiol-1,3, Diethylenglykol, Dipropylenglykol, Butandiol-1,3, Butandiol-1,4, Neopentylglykol, Hexandiol-1,6; 2,2-Bis(4-hydroxycyclohexyl)-propan; bis-oxalkyliertes Bisphenol A, Perhydrobisphenol-A, Pentandiol-1,3; 2-Ethylhexandiol-1,6 und andere eingesetzt werden.

Die ungesättigten Polyesterharze können nach literaturbekannten Verfahren hergestellt werden. (Wagner-Sarx, "Lackkunstharze", 5. Auflage, Carl Hanser Verlag, 1971) Die Polyesterharze besitzen Gewichtsmittelmolekulargewichte von 8000 bis 25 000 Die Säurezahl (in mg KOH/g Polyesterharz, die zur Neutralisation der freien Säuregruppierungen benötigt wird) liegt vorzugsweise unter 5. Die OH-Zahl (in mg KOH/g Polyesterharz, die zur Neutralisation der zur Veresterung der freien OH-Gruppen notwendigen Essigsäure benötigt wird) liegt vorzugsweise im Bereich von 5 bis 20, insbesondere 10 bis 15. Die Zusammensetzung des Polyesterharzes ist so zu wählen, daß die resultierenden Harze einen Gehalt an ungesättigten Doppelbindungen von 0,02 bis 0,05, vorzugsweise 0,03 bis 0,04 mäqv. pro Gramm Polyesterharz besitzen. Die ungesättigten Polyesterharze besitzen eine Löslichkeit in den Vinylmonomeren oder Vinylmonomerengemischen von bis zu 30 Gew.-%, bezogen auf die Gesamtsumme aus Vinylmonomer bzw. -gemisch und Polyesterharz.

Die nichtvernetzten, kammartigen Pfropfpolymerisate können durch radikalische Polymerisation der Vinylmonomeren A.1.) und gegebenenfalls A.2.) in Gegenwart der ungesättigten Polyesterharze B.) hergestellt werden.

Man kann in Substanz oder unter Mitverwendung von bei der radikalischen Polymerisation üblichen Lösungsmitteln, insbesondere Ethylbenzol, in einem Volumenverhältnis von Lösungsmittel zu Monomer bzw. Monomermischung von 1:1,5 arbeiten.

Le A 23 721

Das Gewichtsverhältnis von eingesetztem ungesättigtem Polyesterharz zu Vinylmonomer oder -gemisch ist bevorzugt 10:90 bis 30:70. Die Polymerisation der Monomeren in Gegenwart des ungesättigten Polyesters kann durch übliche Polymerisationsinitiatoren ausgelöst werden. Beispiele solcher Initiatoren sind organische Peroxide, Hydroperoxide oder Mischungen daraus. Beispielhaft seien genannt: Benzoylperoxid, Cyclohexanonhydroperoxid, Methylethylketonperoxid, Methylisobutylketonperoxid, Lauroylperoxid, Di-tert.-Butylperoxid, Cumolhydroperoxid. Bevorzugt ist Benzoylperoxid. Die Menge an eingesetztem Initiator beträgt 0,2 bis 0,4 Mol-%, bezogen auf die Molmenge an Vinylmonomer bzw. Vinylmonomergemisch.

Die nicht vernetzten kammartigen Pfropfprodukte können bei $70^0$ C bis $100^0$ C, vorzugsweise bei 70 bis $80^0$ C hergestellt werden.

Die Reaktionszeit ist so zu wählen, daß der Umsatz an Vinylmonomer im Bereich von 10 bis 40 %, bezogen auf die Menge an Vinylmonomer, vorzugsweise 15 - 30 % beträgt. Die Pfropfpolymerisate können durch Abkühlen der Reaktionsmischung und Umfällung in geeigneten Lösungsmitteln verbessert werden. Bevorzugt ist Chloroform/Methanol.

Bei der Pfropfpolymerisation der Vinylmonomeren auf die ungesättigten Polyesterharze können insbesondere bei Einsatz kleiner Polyesterharzmengen geringe Mengen nicht aufgepfropftes Vinylmonomerpolymerisat entstehen.

Le A 23 721

Mit Pfropfpolymerisat werden hier die Produkte bezeichnet, die durch Polymerisation von Vinylmonomeren in Gegenwart ungesättigter Polyester entstanden sind, und also geringe Mengen an nebenher polymerisierten Vinylmonomerpolymerisat enthalten können.

Die erfindungsgemäßen nichtvernetzten Pfropfpolymerisate mit kammartigem Aufbau können als "Verträglichkeitsvermittler" für Mischungen aus unverträglichen Polymeren, insbesondere Polyalkylenterephthalate und Polymerisaten von Vinylmonomeren, insbesondere Polystyrol und Styrol/-Acrylnitril-Copolymere eingesetzt werden.

Polyalkylenterephthalat bedeutet hier Reaktionsprodukte aus aromatischen Dicarbonsäuren oder ihren reaktionsfähigen Derivaten (z.B. Dimethylestern oder Anhydriden) die überwiegend aus Terephthalsäure oder -derivaten bestehen und aliphatischen, cycloaliphatischen oder araliphatischen Diolen und Mischungen dieser Reaktionsprodukte. Bevorzugte Polyalkylenterephthalate lassen sich aus Terephthalsäure (oder ihren reaktionsfähigen Derivaten) und aliphatischen oder cycloaliphatischen Diolen mit 2 -10 C-Atomen nach bekannten Methoden herstellen (Kunststoff-Handbuch, Bd. VIII,S. 695 ff, Carl Hanser Verlag, München 1973). Bevorzugte Polyalkylenterephthalate enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol-und/oder Butandiol-1,4-Reste.

Le A 23 721

Die bevorzugten Polyalkylenterephthalate können neben Terephthalsäureresten bis zu 20 Mol-% Reste anderer aromatischer Dicarbonsäuren mit 8 - 14 C-Atomen oder aliphatischer Dicarbonsäuren mit 4 - 12 C-Atomen enthalten, wie z.B. Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Butandiol-1,4-glykolresten bis zu 20 Mol-% anderer aliphatischer Diole mit 3 - 12 C-Atomen oder cycloaliphatischer Diole mit 6 - 21 C-Atomen enthalten, z.B. Reste von Propandiol-1,3, 2-Ethylpropandiol-1,3, Neopentylglykol, Pentan-diol-1,5, Hexandiol-1,6, Cyclohexan-di-methanol-1,4, 3-Methylpentandiol-2,4, 2-Methylpentandiol-2,4, 2,2,4-Trimethylpentandiol-1,3 und 1,6, 2-Ethylhexandiol-1,3, 2,2-Diethylpropandiol-1,3, Hexandiol-2,5, 1,4-Di-(ß-hydroxyethoxy)-benzol, 2,2-Bis-4-hydroxycyclobutan, 2,2-Bis-(3-ß-hydroxyethoxyphenyl)-propan und 2,2-Bis-(4-hydroxypropoxyphenyl)-propan (De-OS 24 07 647, 24 07 776, 27 15 932).

Die Polyalkylenterephthalate können durch Einbau relativ kleiner Mengen 3- oder 4-wertigen Alkohole oder 3- oder 4-basiger Carbonsäuren, wie sie z.B. in der DE-OS 19 00 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Polyalkylenterephthalate sind auch Copolyester, die aus mindestens zwei der obengenannten Alkoholkomponenten hergestellt sind; besonders bevorzugte Copolyester sind Poly-(ethylenglykol/butandiol-1,4)-terephtalate.

Die vorzugsweise verwendeten Polyalkylenterephthalate besitzen im allgemeinen eine Intrisic-Viskosität von 0,4 - 1,5 dl/g, vorzugsweise 0,5 - 1,3 dl/g, insbesondere 0,6 - 1,2 dl/g, jeweils gemessen in Phenol/o-Dichlorbenzol (1 : 1 Gew.-Tl.) bei 25°C.

Pfropfpolymerisate aus Vinylmonomeren sind aus wenigstens einem Momomeren aus der Reihe Styrol, α-Methylstyrol, Halogenstyrol, kernalkyliertem Styrol mit Alkylresten aus 1 bis 6 C-Atomen und gegebenenfalls (Meth)Acrylnitril aufgebaut. Es handelt sich bevorzugt um Polymerisate aus 100 - 50 Gew.-% Styrol, α-Methylstyrol oder Mischungen daraus und 0 - 50 Gew.-% Acrylnitril. Derartige Copolymere sind harzartig und thermoplastisch.

Besonders bevorzugt ist Polystyrol und Copolymere aus 80 - 60 Gew.-% Styrol und 20 - 40 Gew.-% Acrylnitril.

Le A 23 721

Solche Copolymermassen sind bekannt und lassen sich insbesondere durch radikalische Polymerisation, insbesondere durch Emulsions-, Suspensions-, Lösungs- oder Massepolymerisation herstellen. Die Copolymeren besitzen vorzugsweise Molekulargewichte von 15.000 bis $2 \cdot 10^5$.

Die Mischungen aus den Polyalkylenterephthalaten, Vinylpolymerisaten und den erfindungsgemäßen nicht vernetzten Pfropfprodukten mit kammartigem Aufbau können hergestellt werden, indem man die jeweiligen Bestandteile in bekannter Weise vermischt und bei Temperaturen von 180 - 240°C in üblichen Aggregaten wie Walzen, Innenknetern, Extrudern oder Doppelwellenschnecken schmelzcompoundiert oder schmelzextrudiert.

Die Herstellung von Formkörpern kann durch Pressen bzw. Spritzgießen bei einer Temperatur von 200 - 240°C erfolgen.

Le A 23 721

Beispiele:

Beispiel 1

Herstellung der Pfropfgrundlage (ungesättigte Polyester)

In eine ständig mit Stickstoff gespülte Apparatur werden 0,1042 mol Dimethylterephthalat, 0,1042 mol Dimethylisophthalat, 0,00212 mol Fumarsäuredimethylester, 0,29473 mol Butandiol-1,4 und 0,00013 mol Tetraisopropylorthotitanat eingebracht. Die Apparatur wird in ein auf 80°C eingestelltes Heizbad eingebracht und die Ausgangsprodukte aufgeschmolzen. Die Reaktionsmasse wird 30 Minuten bei einer Temperatur von 175 - 180°C und danach weitere 60 Minuten bei 180 - 190°C gerührt, wobei ständig Methanol abdestilliert wird. In einer zweiten Stufe wird unter Rühren bei 220 - 230°C und einem Druck von 0,10 - 0,15 mbar während 45 Minuten Butandiol-1,4 abdestilliert.

Das Produkt wird unter Beibehaltung des Unterdrucks abgekühlt und durch anschließendes Umfällen aus dem System Chloroform/Methanol isoliert.

Das Produkt besitzt ein Gewichtsmittelmolekulargewicht von 18.700 (gemessen über Streulichtmethode), eine Säurezahl von 1 (mg KOH/g-Substanz) und eine OH-Zahl von 15,7 (mg KOH/g-Substanz).

Le A 23 721

**Beispiel 2**

Herstellung des Pfropfproduktes über radikalische Polymerisation in Substanz

36,2 g des gemäß Beispiel 1 gewonnenen Polyesters werden unter ständigem $N_2$-Strom bei 80$^0$C mit 150 ml Styrol versetzt und langsam gerührt. Nachdem der Polyester vollständig im Monomeren gelöst ist, werden 0.846 g Benzoylperoxid zugegeben und die Temperatur auf 80$^0$C gehalten. Nach 120 Minuten wird die Reaktion durch Abkühlen abgebrochen und das Produkt in dem System Chloroform/Methanol umgefällt und isoliert.

Ausbeute: 68 g

Umsatz an Styrol: 23,4 %

Pfropfausbeute: 36 %

Pfropfgrad: 0,32

**Beispiel 3**

Herstellung des Pfropfproduktes über radikalische Polymerisation in Lösung

56,25 g des gemäß Beispiel 1 hergestellten Polyesters wurden unter einem ständigen $N_2$-Strom auf 80$^0$C erwärmt und mit 100 ml Ethylbenzol und nach 10 Minuten mit 150 ml Styrol versetzt. Nach Auflösung des Polyesters in der Ethylbenzol/Styrol-Mischung (langsames Rühren) werden 0,970 g Benzoylperoxid zugegeben. Nach 120 Minuten wird die Reaktion durch Abkühlen abgebrochen und das Produkt durch Umfällen aus dem System Chloroform/Methanol isoliert.

Ausbeute: 79,6 g

Umsatz an Styrol: 17,2 %

Pfropfausbeute: 56,5 %

Pfropfgrad: 0,245

**Beispiel 4**

Herstellung eines SAN-Pfropfproduktes über radikalische Polymerisation in Lösung

56,25 g des gemäß Beispiel 1 hergestellten Polyesters werden unter einem ständigen Stickstoffstrom auf 75°C erwärmt und mit 100 ml Ethylbenzol sowie nach 10 Minuten mit 136,1 g einer Mischung aus Styrol und Acrylnitril (Gewichtsverhältnis: 75,5 zu 24,5) versetzt. Unter langsamen Rühren wird der Polyester in der Ethylbenzol/Monomermischung gelöst und danach 0,97 g Benzoylperoxid zugegeben. Nach 60 Minuten wird die Reaktion durch Abkühlen unterbrochen und das Produkt durch Umfallen aus dem System Chloroform/Methanol isoliert.

Ausbeute: 79,77 g

Umsatz an Styrol/Acrylnitril-Gemisch: 17,8 %

**Beispiel 5**

Im folgenden wird der Einsatz der erfindungsgemäßen kammartigen Pfropfprodukte als "Verträglichkeitsvermittler" beschrieben

Le A 23 721

20 Gew.-Teile des gemäß Beispiel 2 erhaltenen Pfropfproduktes werden mit 40 Gew.-Teilen eines handelsüblichen Polybutylenterephthalats mit einer Viskositätszahl von 0,95 - 1,0 (Pocan 7.300 von Bayer) und 40 Gewichtsteilen eines handelsüblichen Polystyrols (Polystyrol 143 E von BASF) auf einer Walze bei einer Temperatur von 220°C gemischt. Das aus dem Walzfell durch Mahlen erhaltene Granulat wurde bei 220°C zu einer 1 mm starken Preßplatte verarbeitet. Aus diesen Platten wurden Formkörper der Abmessungen 5 cm / 1 cm / 0,1 cm hergestellt. Anhand dieser Formkörper wurden mit Hilfe eines Lonza-Torsionsautomaten (Arbeitsprinzip der freien Torsionsschwingung, ca. 1 HZ) über Messung der Schubmodulkurven die Glaspunkte der Einzelbestandteile sowie der Schmelzbereich des Polybutylenterephthalats bestimmt.

Die folgende Tabelle zeigt die erhaltenen Werte der Abmischung im Vergleich zu den Reinprodukten.

Die verschobenen Werte der Glasübergänge sowie insbesondere des Schmelzbereichs zeigen deutlich die verträglichkeitsvermittelnde Wirkung des Pfropfproduktes.

Le A 23 721

| Zusammensetzung | | | Glasübergänge | | Schmelzbereich |
|---|---|---|---|---|---|
| Polybutylen-terephthalat Gew.-Tl. | Polystyrol Gew.-Tl. | Pfropfprodukt (Versuch 2) Gew.-Tl. | Polybutylen-terephthalat [°C] | Polystyrol [°C] | Polybutylen-terephthalat [°C] |
| 100 | - | - | 50 | - | 215 |
| - | 100 | - | - | 109 | - |
| 40 | 40 | 20 | 51-52 | 107-108 | 143 |

0212053

Patentansprüche

1. Nichtvernetzte Pfropfpolymerisate mit kammartigem Aufbau von Einheiten von Vinylmonomeren oder -gemischen als Kammäste auf Polyesterharze, worin die als Pfropfgrundlage benutzten Polyesterharze in den verwendeten Vinylmonomeren oder -gemischen in Mengen bis zu 30 Gew.-%, bezogen auf die Summe aus Vinylmonomer oder -gemisch und Polyesterharz, löslich sind, Säurezahlen <5 und OH-Zahl zwischen 5 und 20 und einen Gehalt an ungesättigten Doppelbindungen von 0,02 bis 0,05 mäqv. pro Gramm Polyesterharz sowie ein mittleres Molekulargewicht (Gewichtsmittel) von 8000 bis 25000 besitzen.

2. Nichtvernetzte Pfropfpolymerisate gemäß Anspruch 1 aus

   A.) 90 - 70 Gew.-Teilen von Vinylmonomeren bzw. Vinylmonomergemischen auf
   B.) 10 - 30 Gew.-Teilen eines Polyesterharzes

   auf Basis einer Mischung von α-β-ethylenisch unge-sättigten Dicarbonsäuren, aromatischen Dicarbonsäuren und zweiwertigen Alkoholen.

Le A 23 721

3. Nichtvernetzte Pfropfpolymerisate gemäß Anspruch 1 aus 90 - 70 Gew.-Teilen eines Vinylmonomergemischs aus

    A.1.) 100 - 70 Gew.-% Styrol, α-Methylstyrol, kernsubstituiertem Styrol oder Mischungen daraus und

    A.2.) 0 - 30 Gew.-% (Meth)Acrylnitril auf 10 - 30 Gew.-Teile eines Polyesterharzes B.)

4. Verwendung der nichtvernetzten Pfropfpolymerisate mit kammartigem Aufbau gemäß Anspruch 1 bis 3 als Verträglichkeitsvermittler für Mischungen aus Polyalkylenterephthalat und Polymerisaten aus Vinylmonomeren bzw. Vinylmonomergemischen.

Le A 23 721